(19) Europäisches Patentamt
European Patent Office
Office européen des brevets

(11) Veröffentlichungsnummer: **0 335 857 B1**

(12) **EUROPÄISCHE PATENTSCHRIFT**

(45) Veröffentlichungstag der Patentschrift:
02.05.91 Patentblatt 91/18

(51) Int. Cl.$^5$: **F16B 5/07, F16B 2/00**

(21) Anmeldenummer: **89890054.3**

(22) Anmeldetag: **22.02.89**

(54) **Verbindung zwischen mindestens zwei Profilen oder profilierten Blechen.**

(30) Priorität: **30.03.88 AT 844/88**

(43) Veröffentlichungstag der Anmeldung:
**04.10.89 Patentblatt 89/40**

(45) Bekanntmachung des Hinweises auf die
Patenterteilung:
**02.05.91 Patentblatt 91/18**

(84) Benannte Vertragsstaaten:
**BE CH DE ES FR GB GR IT LI LU NL SE**

(56) Entgegenhaltungen:
**DE-C- 3 629 636
SOVIET INVENTIONS ILLUSTRATED, sections
P,Q, week KO5, March 16, 1983, DERWENT
PUBLICATIONS LTD., London, Q61**

(73) Patentinhaber: **Austria Metall
Aktiengesellschaft
A-5282 Braunau am Inn (AT)**

(72) Erfinder: **Springer, Franz
Salzburgerstrasse 25
A-528o Baunau (AT)**

(74) Vertreter: **Hain, Leonhard, Dipl.-Ing.
Tal 18/IV
W-8000 München 2 (DE)**

**Beschreibung**

Die Erfindung betrifft eine Verbindung zwischen mindestens zwei Profilen oder profilierten Blechen gemäß dem Oberbegriff des Patentanspruches 1.

Bei herkömmlichen Verbindungen werden die zu verbindenden Profile oder profilierten Bleche im Bereich ihrer Berührungsflächen durchbohrt und verschraubt oder vernietet. Die hierzu erforderlichen Bohrungen werden entweder bei der Montage oder bereits bei der Fertigung der Profile angebracht. Dabei muß auf eine genaue Tolerierung geachtet werden, damit die Bohrungen beim Zusammenbau übereinstimmen. Dadurch wird aber die Fertigung und die Montage der Profile arbeits- und kostenaufwendig. Selbst bei genauer Tolerierung der Bohrungen sind oft noch zusätzlich Nachrichtarbeiten erforderlich. Auch kommt es vor, daß eine Bohrmaschine nur beschwerlich oder überhaupt nicht in die Arbeitsstellung gebracht werden kann. Bei einer lösbaren Verbindung zwischen zwei flächigen Werstüken (DE-C-3 629 636) ist es bekannt, am einen Werkstück einen abstehenden Randwulst und am anderen Werkstück eine Einsteckrille zur Aufnahme des Randwulstes auszubilden, so daß die beiden Werkstücke entlang einander zugekehrten Konturlinien bzw. Werkstückrändern

über einen Stecksitz miteinander zu verbinden sind. Ein am rillentragenden Werkstück sitzender Niederhalter dient zum Verspannen der beiden ineinandergesteckten Werkstücke, wozu dieser mit seinem hakenförmigen Eingriffsende die anliegende Rillenflanke übergreift und den in der Rille sitzenden Randwulst des anderen Werkstücks festklemmt. Mit dieser bekannten Verbindungseinrichtung lassen sich großflächige Werkstücke entweder entlang ihrer Stoßränder oder in flächig aneinanderliegender Stellung miteinander verbinden. An beiden Werkstücken sind aber einander angepaßte Aufnahmeorgane erforderlich, wodurch die Herstellungsaufwendungen erheblich vergrößert, andererseits aber die Verbindungsmöglichkeiten stark eingeschränkt werden.

Der Erfindung liegt demgegenüber die Aufgabe zugrunde, eine lösbare Verbindung zwischen aneinanderliegenden Profilen oder profilierten Blechen zu schaffen, die den Einsatz einfacherer und kostengünstigerer Profile und die auch mehrere Verbindungsstellungen ermöglicht.

Diese Aufgabe wird an einer Verbindung nach dem Oberbegriff des Patentanspruches 1 erfindungsgemäß durch die Kennzeichnungsmerkmale dieses Patentanspruches gelöst.

Vorteilhafte Weiterentwicklungen der Erfindung sind in Unteransprüchen beansprucht.

Bei der erfindungsgemäßen Profil-Verbindung ist lediglich an einem der beiden Werkstücke ein Aufnahmeorgan auszubilden, während das andere Werkstück keine zusätzlichen Anpassungsmaßnahmen verlangt. Außerdem können die Verbindungsorgane entlang dieses Aufnahmeorganes platzungebunden angebracht werden, wie es auch möglich ist, die Profile mit zueinander in senkrechter Richtung verlaufenden Rändern zu verbinden. Auf zusätzliche Durchbrechungen an den Profilen kann ganz verzichtet werden. Die Verbindungsorgane lassen sich leicht in die am einen Profil ausgebildete Wange einhängen und die das andere Profil übergreifenden Spannpratzen ebenso einfach anbringen. Vorteilhaft erstreckt sich die Wange mit ihrem hakenförmigen Querschnitt über die gesamte Länge des Profiles, was sich bei Strangpreßprofilen ohne Schwierigkeit ausführen läßt. Ist am hakenförmigen Ende der Verbindungsorgane eine Auflagenverbreiterung ausgebildet, dann werden die in die Wange eingeleiteten Kräfte besser auf das gesamte Profil verteilt und außerdem sind die Verbindungsorgane auch gegen Drehen gesichert. Die Verbindungsorgane können mit den Spannpratzen sowohl durch eine Schraub-Fortsetzung Seite 3. als auch durch eine Nietverbindung verbunden sein. Auch eine Keilverbindung ist denkbar. Die Montage dieser Profile läßt sich besonders schnell ausführen, wenn die Spannpratzen zu einem Profilelement ausgebildet sind, das parallel zur Längserstreckung des Profiles mit der Wange verläuft. Dadurch können mehrere Verbindungsorgane in einer Spannpratze befestigt und die Gesamtanzahl der benötigten Einzelteile verringert werden.

Die Erfindung wird nachfolgend anhand von Ausführungsbeispielen, die auch in der Zeichnung dargestellt sind, näher beschrieben. Es zeigen :

Fig. 1 eine Verbindung zwischen zwei aneinanderliegenden Profilen,

Fig. 2 einen Schnitt nach der Linie II-II der Fig. 1,

Fig. 3 eine etwas abgeänderte Verbindungsart,

Fig. 4 einen Schnitt nach der Linie IV-IV der Fig. 3,

Fig. 5 und 6 weitere Ausführungsvarianten,

Fig. 7 eine Ansicht eines Verbindungsorganes gemäß Fig. 6 und

Fig. 8 eine praktische Anwendung der erfindungsgemäßen Verbindung.

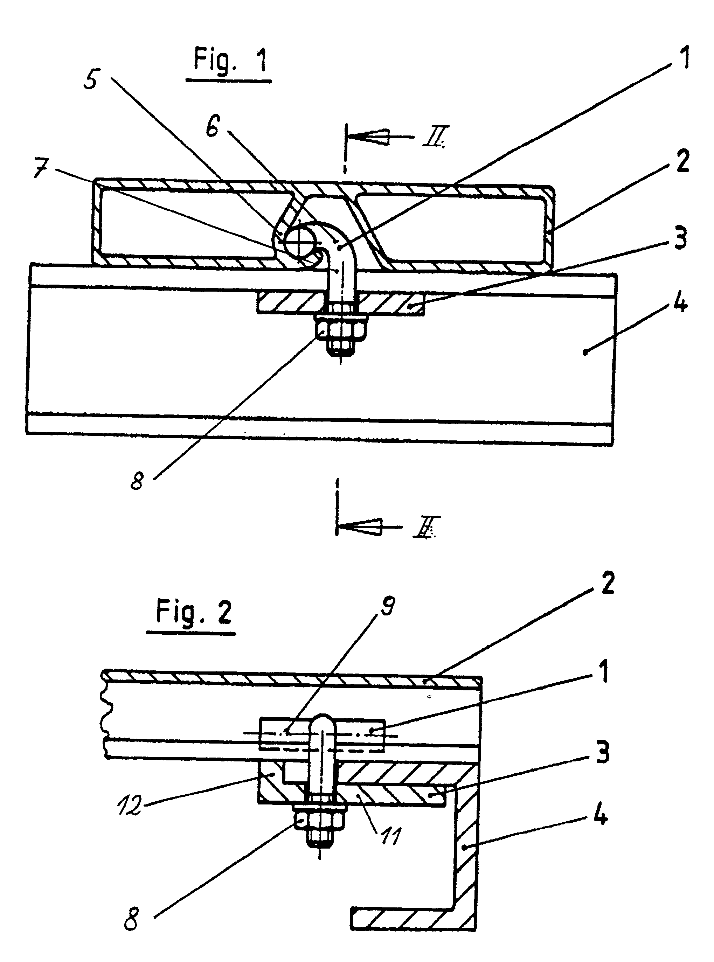

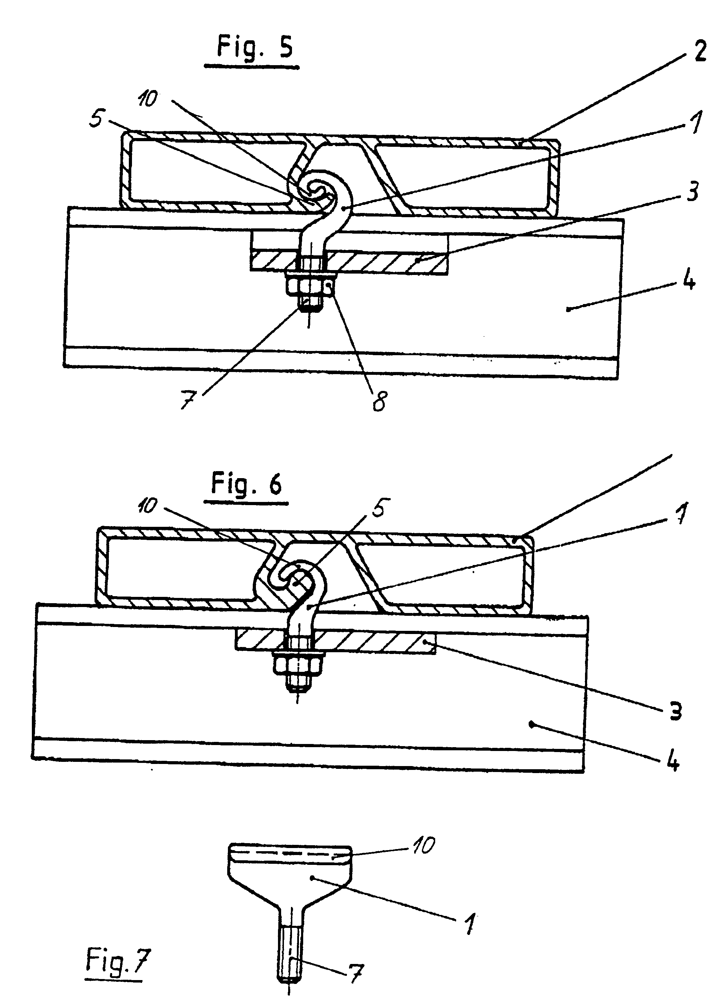

Ein Verbindungsorgan 1 spannt ein Profil 2 mittels einer Spannpratze 3 mit einem Profil 4 zusammen. Das Profil 2 weist eine Wange 5 mit hakenförmigem Querschnitt auf, in die ein hakenförmiges Ende 6 des Verbindungsorganes 1 eingehängt ist. Ein zylindrisches Ende 7 des Verbindungsorganes 1 ist durch diese Spannpratze gesteckt und durch eine Mutter 8 mit diesem verschraubt. Das hakenförmige Ende 6 des Verbindungsorganes 1 besitzt entweder einen Querstab 9, wie die Fig. 1 bis 4 zeigen, oder eine Auflageverbreiterung 10, die durch Einrollen oder Aufschneiden erzeugt ist, wie in den Fig. 5 und 6 zu sehen ist. Diese Verbreiterung dient sowohl als Drehsicherung als auch als Auflagenverbreiterung, um die auf die Profile einwirkende Spannkraft besser in die Wange 5 einleiten zu können.

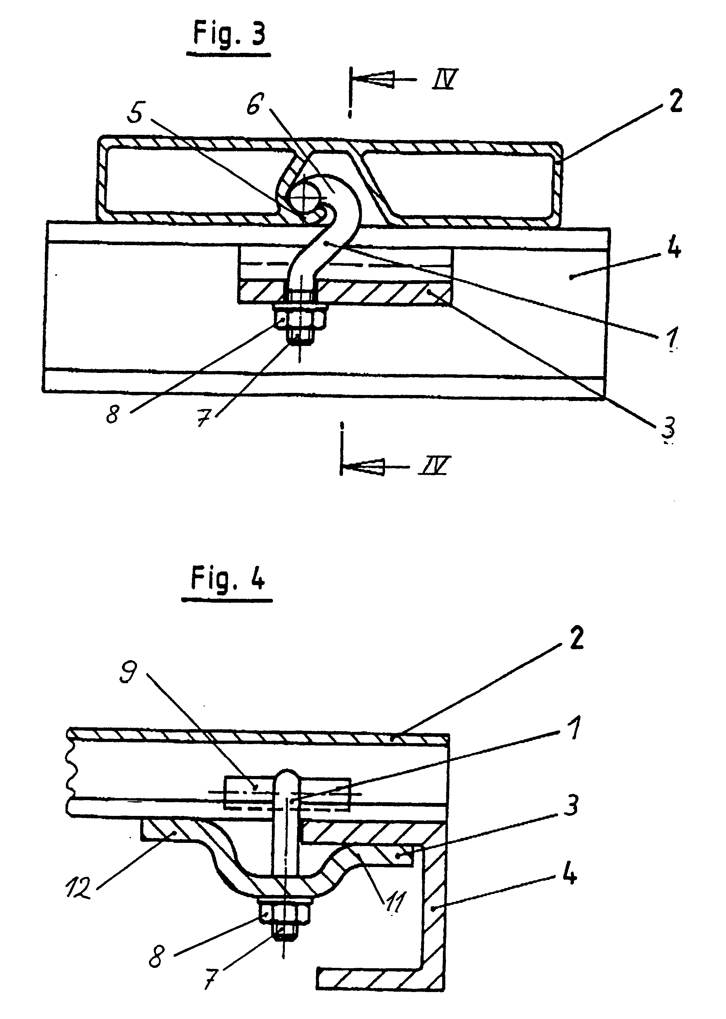

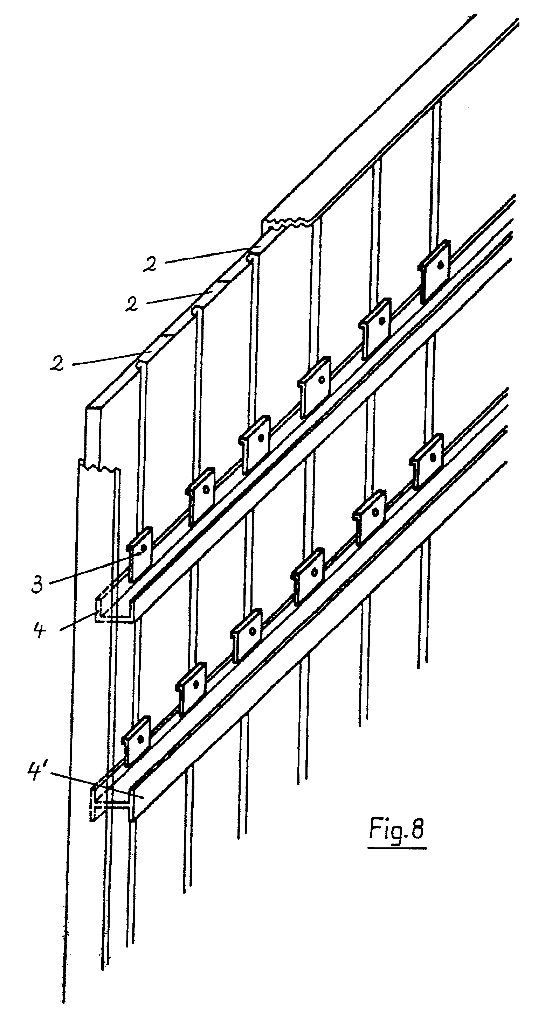

Die Spannpratze 3 ist in Fig. 1 beispielhaft als Winkelprofil und in Fig. 3 als asymmetrischer Bügel dargestellt. Ein Schenkel 11 der Spannpratze 3 liegt am Profil 4 an und ein Schenkel 12 stützt sich am Profil 2 ab. Fig. 8 zeigt eine beispielsweise Verwendung der Erfindung, in der sowohl die Verbindung mit einem Ü-Profil 4 als auch mit einem 1-Profil 4' dargestellt ist.

## Ansprüche

1. Verbindung zwischen mindestens zwei Profilen oder profilierten Blechen (2, 4) mit am einen Profil (4) befestigten Verbindungsorganen (1), die mit ihren ersten hakenförmig ausgebildeten Enden (6) in ein an der Oberfläche des anderen Profiles ausgebildetes Aufnahmeorgan eingreifen, um so die beiden Profile in Anliegestellung miteinander zu verbinden, dadurch gekennzeichnet, daß das Aufnahmeorgan in Form einer Wange (5) mit hakenförmigem Querschnitt im Innern des Profiles (2) mit dessen Oberfläche abschließend und etwa normal zur Oberfläche des anderen Profils (4) ausgebildet ist, daß zur Befestigung der mit ihren hakenförmigen Enden (6) in die Wange (5) eingreifenden Verbindungsorgane (1) am Profil (4) mindestens eine Spannpratze (3) vorgesehen ist, die mit einem Schenkel (11) dieses Profil (4) an der von der gemeinsamen Berührungsfläche der beiden Profile (2, 4) abgekehrten Profilfläche übergreift und mit einem anderen Schenkel (12) sich am Profil (2) abstützt und daß die Verbindugsorgane (1) mit ihren zweiten zylinderförmigen Enden (7) an der Spannpratze befestigt sind.

2. Verbindung nach Anspruch 1, dadurch gekennzeichnet, daß die Wange (5) mit hakenförmigem Querschnitt an der gesamten Längserstreckung des Profiles (2) durchlaufend ausgebildet ist.

3. Verbindung nach Anspruch 1 oder 2, dadurch gekennzeichnet, daß das hakenförmige Ende (6) des Verbindungsorganes (1), welches in der hakenförmigen Wange (5) eingehängt ist, an der Spitze des hakenförmigen Organes eine längliche, senkrecht zur Längserstreckung des Verbindungsorganes stehende Auflagenverbreiterung (10) aufweist, die über einen Teil der Längserstreckung der Wange (5) in dieser anliegt.

4. Verbindung nach einem der Ansprüche 1 bis 3, dadurch gekennzeichnet, daß das Verbindungsorgan (1) an seinem etwa zylinderförmigen Ende (7) ein Gewinde aufweist und durch eine Schraubverbindung mit einer Mutter (8) an der Spannpratze befestigt ist.

5. Verbindung nach Anspruch 1, dadurch gekennzeichnet, daß das Verbindungsorgan (1) durch eine Nietverbindung an der Spannpratze (3) befestigt ist.

6. Verbindung nach einem der vorhergehenden Ansprüche, dadurch gekennzeichnet, daß die Spannpratze (3) als Profil ausgebildet ist, das parallel zur Längserstreckung des mit der Wange (5) mit hakenförmigem Querschnitt versehenen Profiles (2) oder profilierten Blechen angeordnet ist.

## Claims

1. A connection between at least two profiled sections or profiled metal plates (2, 4) with, fixed on one profiled section (4), connecting members (1) of which the first hook-shaped ends (6) engage a receiving member constructed on the surface of the other profiled member in order thus to connect the two profiled members to each other in an adjacently disposed position, characterised in that the receiving member in the form of a side member (5) of hook-shaped cross-section is constructed in the interior of the profiled section (2) to be flush with the surface thereof and to be substantially at right-angles to the surface of the other profiled member (4), and in that for attachment of the connecting members (1) which have their hook-shaped ends (6) engaging the side member (5) there is provided on the profiled section (4) at least one clamping claw (3) having one arm (11) engaging over the profiled section (4) on the surface which is remote from the common surface of contact between the two profiled sections (2, 4) while the other arm (12) is braced on the profiled section (2) and in that the second cylindrically-shaped ends (7) of the connecting members (1) are fixed on the clamping claw.

2. A connection according to claim 1, characterised in that the side member (5) of hook-shaped cross-section is constructed continuously over the entire longitudinal extension of the profiled section (2).

3. A connection according to claim 1 or 2, characterised in that the hook-shaped end (6) of the connecting member (1) which is fitted into the hook-shaped side member (5) has at the tip of the hoot-shaped member an elongated widened support means (10) set at a right-angle to the longitudinal extension of the connecting member and which rests therein over a part of the longitudinal extension of the side member (5).

4. A connection according to one of claims 1 to 3, characterised in that the connecting member (1) has a screwthread on its substantially cylindrically shaped end (7) and is fixed on the clamping claw (3) by a screwed connection with a nut (8).

5. A connection according to claim 1, characterised in that the connecting member (1) is fixed on the clamping claw (3) by a riveted connection.

6. A connection according to one of the preceding claims, characterised in that the clamping claw (3) is constructed as a profiled member disposed parallel with the longitudinal extension of the profiled section (2) or profiled metal plates provided with the side member (5) which has a hook-shaped cross-section.

## Revendications

1. Jonction entre au moins deux profilés ou tôles profilées (2, 4) comportant des organes (1) de jonction qui sont fixés à un profilé (4), dont une première extrémité (6), recourbée en crochet, est engagée dans un élément récepteur formé sur la surface de l'autre profilé, de manière à relier les deux profilés accolés, jonction caractérisée en ce que l'élément récepteur a la conformation d'une joue (5) à section droite recourbée en crochet à l'intérieur du profilé (2), se terminant par la surface de ce dernier et sensiblement normale à la surface de l'autre profilé (4) ; en ce que, pour fixer, à ce profilé (4), les organes (1) de jonction dont les extrémités (6), recourbées en crochet, sont engagées dans la joue (5), il est prévu au moins une bride (3) de serrage dont un bras (11) recouvre la surface du profilé (4) opposée à la surface de contact commune des deux profilés (2, 4), et dont l'autre bras (12), s'appuie contre le profilé (2) ; et en ce que les organes (1) de jonction sont fixés à cette bride de serrage par leur seconde extrémité cylindrique (7).

2. Jonction selon la revendication 1, caractérisée en ce que la joue (5), à section recourbée en crochet, est prolongée sur toute la longueur du profilé (2).

3. Jonction selon la revendication 1 ou 2, caractérisée en ce que l'extrémité (6), recourbée en crochet, de l'organe (1) de jonction, qui est accrochée dans la joue (5) recourbée en crochet, comporte, au bout de cet organe en forme de crochet, un élargissement (10) oblong d'appui, perpendiculaire à la longueur dudit organe, qui est appliqué dans cette joue (5) sur une partie de la longueur de celle-ci.

4. Jonction selon l'une des revendications 1 à 3, caractérisée en ce que l'organe (1) de jonction comporte à son extrémité (7) sensiblement cylindrique, un filetage et est fixé à la bride (3) de serrage par assemblage vissé, au moyen d'un écrou (8).

5. Jonction selon la revendication 1, caractérisée en ce que l'organe (1) de jonction est fixé par une rivure à la bride (3) de serrage.

6. Jonction selon l'une quelconque des revendications précédentes, caractérisée en ce que la bride (3) de serrage est formée d'un profilé, qui est disposé parallèlement à la longueur du profilé (2), ou de la tôle profilée qui comporte la joue (5), à section recourbée en crochet.

## Fig. 1

## Fig. 2

Fig. 3

Fig. 4

## Fig. 5

## Fig. 6

## Fig.7

Fig.8